# EUROPEAN PATENT APPLICATION

(11) **EP 0 572 040 A1**
(43) Date of publication of application: **01.12.1993**
(21) Application number: 93110508.4
(22) Date of filing: 18.03.1987
(51) Int. Cl.: B60G 11/26, F16F 9/46

(54) **Method and apparatus for absorbing mechanical shock**

(30) Priority: 05.06.1986 CA 510950
(62) Divisional of application: 87902925.4
(71) Applicant: LIZELL, Magnus B., Toledo, OH 43623 (US)
(72) Inventor: LIZELL, Magnus B., Toledo, OH 43623 (US)
(74) Representative: Allen, William Guy Fairfax

(57) **Abstract**

A method and apparatus for absorbing mechanical shock is disclosed. The apparatus comprises a pressure cylinder (40) forming a working chamber (42) having first and second portions operable to store damping fluid. The apparatus further comprises the first valve (326) for controlling the flow of damping fluid between the first and second portions of the working chamber during compression of the shock absorber. In addition, the apparatus further comprises a pressure chamber (330) in fluid communication with the first portion of the working chamber and the first valve. A solenoid (370) is also provided for regulating the flow of damping fluid between the pressure chamber and the second portion of said working chamber. A second valve (324) is further provided for controlling the flow of damping fluid between the first and second portions of the working chamber during rebound of the shock absorber.

## Description

### BACKGROUND OF THE INVENTION

### 1. Field of the Invention

This invention relates to automotive suspension systems, and more particularly to a method and apparatus for absorbing mechanical shock.

### 2. Description of Related Art

Shock absorbers are used in conjunction with automotive suspension systems to absorb unwanted vibration which occur during driving. To absorb this unwanted vibration, shock absorbers are generally connected between the body and the suspension of the automobile. A piston is located within the shock absorber and is connected to the body of the automobile through a piston rod. Because the piston is able to limit the flow of damping fluid within the working chamber of the shock absorber when the shock absorber is compressed, the shock absorber is able to produce a damping force which counteracts the vibration which would otherwise be transmitted from the suspension to the body. The greater the degree to which the flow of damping fluid within the working chamber is restricted by the piston, the greater the damping forces which are generated by the shock absorber.

In selecting the amount of damping that a shock absorber is to provide, three vehicle performance characteristics are often considered: ride comfort, vehicle handling and road holding ability. Ride comfort is often a function of the spring constant of the main springs of the vehicle, as well as the spring constant of the seat, tires, and the shock absorber. Vehicle handling is related to the variation in the vehicle's attitude (i.e., roll, pitch and yaw). For optimum vehicle handling, relatively large damping forces are required to avoid excessively rapid variation in the vehicle's attitude during cornering, acceleration and deceleration. Road holding ability is generally a function of the amount of contact between the tires and the ground. To optimize road holding ability, large damping forces are required when driving on irregular surfaces to prevent loss of contact between the wheels and the ground for an excessive period of time.

To optimize ride comfort, vehicle handling, and road holding ability, it is generally desirable to have the damping forces generated by the shock absorber be responsive to the input frequency from the road. When the input frequency from the road is approximately equal to the natural frequency of the body of the automobile (e.g., approximately between 0.2 Hz), it is generally desirable to have the shock absorber provide large damping forces to avoid excessively rapid variation of the vehicle's attitude during cornering, acceleration and deceleration. When the input frequency from the road is between 2-10 Hz, it is generally desirable to have the shock absorber provide low damping forces so as to produce a smooth ride and allow the wheels to follow changes in road elevation. When the input frequency from the road is approximately equal to the natural frequency of the automobile suspension (i.e., approximately 10-15 Hz), it may be desirable to have relatively low damping forces to provide a smooth ride, while providing sufficiently high damping forces so as to prevent excessive loss of contact between the wheels and the ground.

One method for selectively changing the damping characteristics of a shock absorber is disclosed in United States Patent No. 4,597,411. In this reference, a solenoid is used to selectively open and close an auxiliary opening in a base valve of a shock absorber. The base valve then regulates the pressure inside one portion of the working chamber of the shock absorber so as to control damping. Another method for selectively changing the damping characteristics of a shock absorber is disclosed in PCT application No. PCT/SE 86/00212. In one embodiment, this reference discloses the use of a pressure sensor to count the number of compression-rebound cycles of the absorber, as well as an accelerometer attached to the wheel support to determine the vertical velocity of the body of the automobile. The damping characteristics of the absorber are then changes in response to the vertical velocity of the body.

A further method for selectively changing damping characteristics of shock absorbers is disclosed in United Kingdom Patent Application GB 2147683A. In one embodiment, this reference discloses a valve disk which is used to cover channels in a valve body which transfers damping fluid between the upper and lower portions of the working chamber. The valve disk is biased against the valve body by a support member which is disposed partially within a pressure chamber. The pressure chamber communicates with the lower portion of the working chamber through a first flow path, and to the upper portion of the working chamber through a second flow path. To regulate the flow of damping fluid through the second flow path and hence the pressure in the pressure chamber acting on the support member, an auxiliary valve plate is provided. The auxiliary valve plate is disposed over the second flow path and cooperates with a coil which is located on the valve body below a portion of the auxiliary valve plate. When the coil is energized, the magnetic flux generated by the coil produces a biasing force on the auxiliary valve disk causing the auxiliary valve disk to deflect, thereby increasing the opening between the second flow path and the upper portion of the working chamber. Accordingly, when the coil biases the auxiliary valve disk in the position to allow more hydraulic fluid to flow through the second flow path, the pressure of the damping fluid in the pressure chamber declines thereby reducing the force transmitted to the valve plate by the support member. The pressure in the lower portion of the working chamber causes the valve plate to deflect, thereby increasing the amount of damping fluid blowing through the channels.

GB-A-2159917 discloses a direct acting hydraulic shock absorber for damping the movement of the body of an automobile, said absorber comprising a pressure cylinder defining a working chamber having first and second portions operable to store damping fluid; first valve means for controlling the flow of damping fluid between said first and second portions of said working chamber during decrease in volume of said first portion of said working chamber; a first pressure chamber in fluid communication with said first portion of said working chamber and said first valve means; second valve means for controlling the flow of damping fluid between said second and first portions of said working chamber during decrease in volume of said second portion of the working chamber; a second pressure chamber in fluid communication with said second valve means; controllable flow means for regulating the pressure of the damping fluid within said first pressure chamber and the pressure of the damping fluid in said second pressure chamber; whereby the damping fluid within said first pressure chamber is able to bias said first valve means and the damping fluid within said second pressure chamber is able to bias said second valve means.

FR-A-2552515 shows a similar structure.

The present invention is characterised in that said first and second independent flow control means are provided for controlling said first and second valve means.

The invention also provides a method for regulating the flow of damping fluid between first and second portions of the working chamber of a direct acting hydraulic shock absorber, said method comprising the steps of allowing damping fluid to flow between said second portion of said working chamber and a first pressure chamber operable to receive damping fluid; allowing damping fluid to flow between first portion of said working chamber and a second pressure chamber operable to receive damping fluid; regulating the flow of damping fluid from said first portion of said working chamber to said second portion of said working chamber during decrease in volume of said first portion of said working chamber; regulating the flow of damping fluid from said second portion of said working chamber to said first portion of said working chamber during decrease in volume of said second portion of said working chamber; whereby the pressure of the damping fluid in said first pressure chamber is operable to bias a first valve means for controlling the flow of damping fluid between said first and second portions of said working chamber and the pressure of the damping fluid, characterised in that the flow between the second portion of said working chamber and said first pressure chamber may be selectively attenuated so as to regulate the flow of damping fluid between said first and second portions of said working chamber during decrease in volume of said first portion of said working chamber; and in that the flow between the first portion of said working chamber and said second pressure chamber may be selectively attenuated so as to regulate the flow of damping fluid between said first and second portions of said working chamber during decrease in volume of said second portion of said working chamber.

Such an apparatus and method are able to counteract tendencies of an automobile to roll, pitch or yaw during turning, acceleration, or braking and are able to provide an acceptable level of friction between the road surface and the tyre of an automobile so as to maintain the braking and deceleration capability of the automobile.

According to the present invention it is possible to generate an adjustable damping characteristic for the body of an automobile in response to different driving environments and different driving habits.

In order that the present invention may more readily be understood, the following description is given, merely by way of example, reference being made to the accompanying drawings in which:-
Figure 1 is the schematic representation of the apparatus for absorbing mechanical shock according to the teachings of the preferred embodiment of the present invention as shown in operative association with the typical automobile;
Figure 2 is a reduced side elevational view, partially broken away, of one embodiment of the apparatus for absorbing mechanical shock shown in Figure 1 according to the present invention; and
Figure 3 is an enlarged longitudinal cross-section view showing the piston according to the embodiment of the present invention shown in Figure 2.

### DESCRIPTION OF THE PREFERRED EMBODIMENTS

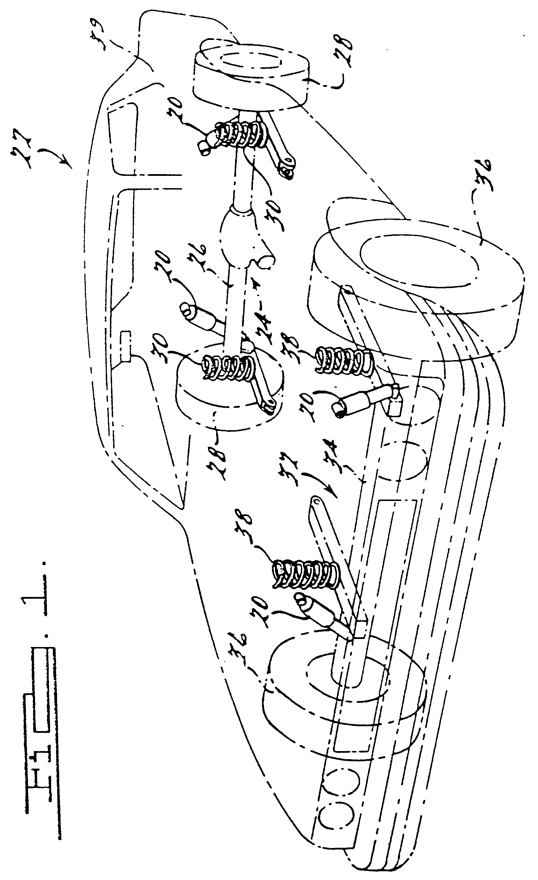

Referring to Figure 1, a plurality of four shock absorbers 20 in accordance with the preferred embodiments of the present invention are shown. The shock absorbers 20 are depicted in operative association with a diagrammatic representation of a conventional automobile 22. The automobile 22 includes a rear suspension 24 having a transversely extending rear axle assembly 26 adapted to operably support the vehicle's rear wheels 28. The axle assembly 26 is operably connected to the automobile 22 by means of a pair of shock absorbers 20 as well as by the helical coil springs 30. Similarly, the automobile 22 has a front suspension system 32 including a transversely extending front axle assembly 34 to operatively support the front wheels 36. The front axle assembly 34 is operatively connected to the automobile 22 by means of a second pair of the shock absorbers 20 and by the helical coil springs 38. The shock absorbers 20 serve to damp the relative movement of the unsprung portion (i.e., the front and rear suspensions 32 and 24) and the sprung portion (i.e., the body 39) of the automobile 22. While the automobile 22 has been depicted as a passenger car, the shock absorber 20 may be used with other types of automotive vehicles as well.

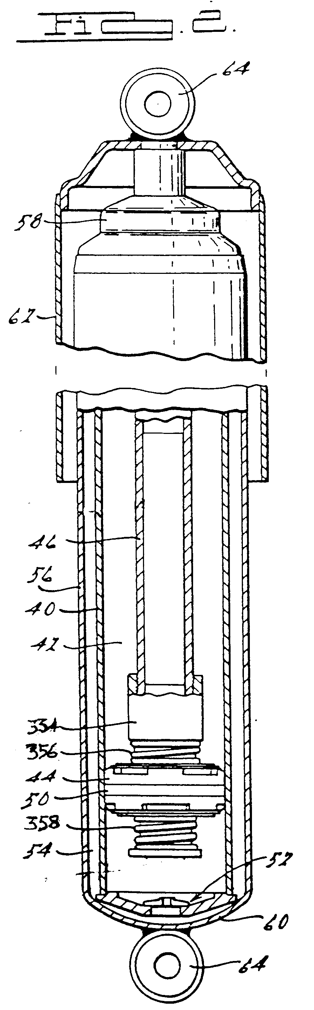

With particular reference to Figure 2, the shock absorber 20 comprises an elongated tubular pressure cylinder 40 defining a damping fluid containing working chamber 42. Disposed within the working chamber 42 is a reciprocable piston 44 that is secured to one end of an axially extending piston rod 46. The piston 44 includes a circumferential groove 48 operable to retain a piston ring 50 as is well known in the art. The piston ring 50 is used to prevent damping fluid from flowing between the outer periphery of the piston 44 and the inner diameter of the cylinder 40 during movement of the piston 44. A base valve, generally designated by the numeral 52, is located within the lower end of the pressure cylinder 40 and is used to control the flow of damping fluid between the working chamber 42 and an annular fluid reservoir 54. The annular fluid reservoir 54 is defined as the space between the outer periphery of the cylinder 40 and the inner periphery of a reservoir tube or cylinder 56 which is arranged centrally around the exterior of the pressure cylinder 40. The construction and operation of the base valve 52 may be of the type shown and described in US Patent No. 3,771,626, which is hereby incorporated by reference.

The upper and lower ends of the shock absorber 20 are provided with generally cup-shape upper and lower end caps 58 and 60 respectively. The end caps 58 and 60 are secured to opposing ends of the reservoir tube 56 by a suitable means such as welding. The shock absorber 20 is shown as being provided with a dirt shield 62 which is secured at its upper end to the upper end of the piston rod 46. Suitable end fittings 64 are secured to the upper end of the piston rod 46 and the lower end cap 60 for operatively securing the shock absorber 20 between the body and the axle assembly of the automobile 22. Those skilled in the art will appreciate that, upon reciprocal movement of the piston 44, damping fluid within the pressure cylinder 40 is transferred between the upper and lower portions of the working chamber 42, and between the working chamber 42 and the fluid reservoir 54. By controlling the flow of damping fluid between the upper and lower portion of the working chamber 42, the shock absorber 20 is able to controllably dampen relative movement between the body and the suspension of the automobile 22 so as to optimize both ride comfort and road handling ability. Toward this end, the piston 44 is provided with a new and improved valving arrangement for selectively controlling the flow of damping fluid between the upper and lower portions of the working chamber 42 during reciprocal movement thereof, as will hereinafter be described in detail.

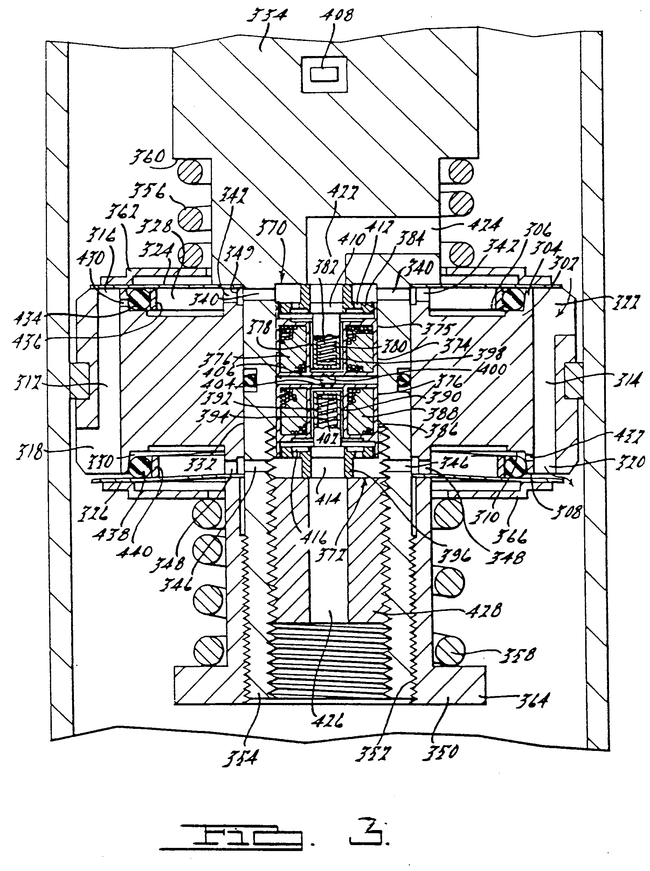

As shown in Figure 3, the piston 44 includes a valve body 302 which comprises an upper surface 304 with a recess portion 306, and a lower surface 308 with a recess portion 310. To allow fluid communication between upper and lower portions of the working chamber 42, the valve body 302 further comprises a first and second plurality of vertical flow passages 312 and 314. The flow passages 312 and 314 extend between the upper surface 306 of the valve body 302 and the lower surface 308 of the valve body 302. Each of the flow passages 312 comprises a valve controlled outlet end portion 316 which opposes a counter-recessed inlet end portion 318. Similarly, each of the flow passages 314 comprises a valve controlled outlet end portion 320 which opposes a counter-recessed inlet end portion 322.

To provide means for controlling the flow of damping between the upper and lower portions of the working chamber 42, two valve disks 324 and 326 are provided. The valve disks 324 and 326 are coaxially arranged adjacent the upper surface 304 and the lower surface 308 of the valve body 302 respectively. The valve disk 324 is of a sufficient diameter so as to register with and cover the outlet end portions 316 of the flow passages 312 thereby preventing damping fluid from entering the outlet end portions 316. However, the valve disk 324 does not cover the counter-recessed inlet end portions 322 of the flow passages 314 so as to allow damping fluid to enter the counter-recessed inlet end portions 322. The valve disk 324 also cooperates with the recessed portion 306 on the upper surface 304 of the valve body 302 so as to form a first pressure chamber 328. Correlatively, the valve disk 326 is of a diameter so as to register with and cover the outlet end portions 320 of the flow passages 314 while not covering the counter-recessed inlet end portions 322. In addition, the valve disk 326 cooperates with a second recessed portion 310 on the lower surface 308 on the valve body 302 to form a second pressure chamber 330.

To support the valve body 302 within the pressure cylinder 40, the valve body 302 has a central bore 332 operable to receive an axially extending piston post 334. The piston post 34 has an upper portion (not shown) with an internally threaded central bore adapted to threadably engage an externally threaded lower end portion of the piston rod 46. An O-ring or similar sealing element 336 is disposed between the valve body 302 and the piston post 334 to prevent damping fluid to flow therebetween. Two radially extending flow passages 340 are disposed on the piston post 334 which communicate with two flow passages 340 in the valve body 302 which radially extend from the pressure chamber 328 to the central bore 332 of the valve body 302. In addition, the piston post 334 also has two radially extending flow passages 346 which communicate with two flow passages 348 which extend from the pressure chamber 330 to the central bore 332 of the valve body 302. The flow passages 340-348 allow damping fluid to flow between the pressure chambers 328 and 330 and one of the solenoids described below. The piston post 334 further includes a radially extending step 349 having an outside diameter greater than the diameter of the central bore 332. Because the step 349 is disposed above the valve body 302, the step 349 limits upper movement of the valve body 302 relative to the piston post 34. In addition, a piston retaining nut 350 is provided having an internally threaded bore 352 which threadably engages an externally threaded lower portion 354 of the piston post 334 at a position below the valve body 302. Because the outside diameter of the piston retaining nut 350 is greater than the diameter of the central bore 332 of the valve body 302, the nut 350 prevents downward movement of the valve body 302 relative to the piston post 334. The piston post 334 and the piston retaining nut 350 also serve to secure the innermost portions of the valve disks 324 and 326. In this regard, the innermost portion of the valve disk 324 engages both the radially extending step 349 of the piston post 334 and the upper surface 304 of the valve body 302. In addition, the radially innermost portion of the valve disk 326 engages the lower surface 308 of the valve body 302 and the piston retaining nut 350.

To bias the valve disks 324 and 326 against the surfaces 304 and 308 of the valve body 302, a pair of coaxially arranged, axially spaced, helical coil springs 356 and 358 are provided. The spring 356 is disposed coaxially with the piston post 334 between a radially extending step 360 formed on the piston post 334 and a backing plate 362 which is located coaxially with, and adjacent to, the upper surface 304 of the valve disk 324. Via the intermediate backing plate 362, the spring 356 is able resiliently and yieldably to bias the valve disk 324 against the upper surface 304 of the valve body 302. Similarly, the spring 358 is disposed between a radially extending flange 364 on the piston retaining nut 350 and a backing plate 366 which is located adjacent to, and coaxially with, the valve disk 326. The spring 358 is thereby able resiliently and yieldably to bias the valve disk 326 against the surface 308 of the valve body 302 by means of the intermediate backing plate 366.

To provide an electrical controllable flow means operable to control the actuation of the valve disks 324 and 326, the piston 44 further comprises a first and second solenoid 370 and 372. The solenoid 370 includes a housing 374 that is disposed within the central bore 375 of the piston post 334. Within the housing 374 are disposed a coil 376 and an armature 378 having enlarged counterbore 380. The armature 378 is axially biased downward relative to the valve body 302 by a helical coil spring 382 which is disposed within the counterbore 380. The lower end of the spring 382 bears against the lower portion of the counterbore 380, whereas the upper end of the spring 382 bears against the lower side of a sealing plate 384. Similarly, the solenoid 372 also includes a housing 386 which is coaxially disposed within the central bore 38 of the piston post 334 at a position below the solenoid 370. Within the housing 386 is disposed a coil 388 and an armature 390 having an enlarged counterbore 392. The armature 390 is biased axially upward relative to the valve body 302 by a helical coil spring 394 which is disposed within the counterbore 392. The upper end of the spring 394 bears against the upper surface of the counterbore 392, whereas the lower end of the spring 394 bears against the upper surface of a sealing plate 396.

The axially lower end of the counterbore 380 of the solenoid 370 has an axial flow passage 398 which is disposed coaxially with an axial flow passage 400 in the housing 374. Similarly, the axially upper end of the counterbore 392 of the solenoid 372 has an axially flow passage 402 which is disposed coaxially with an axial flow passage 404 in the housing 386. Because a pressure sensor 406 is disposed between the housings 374 and 386 adjacent to the flow passages 400 and 404, the pressure sensor 406 is able to determine the pressure differential between the damping fluid in the solenoid 370 and the damping fluid in the solenoid 372. The output from the pressure sensor 406, together with the output from an accelerometer 408, are delivered to the signal conditioning circuit 198 which amplifies the outputs prior to delivery to the computer 202. The computer 202 then generates first and second electrical control signals for controlling the solenoids 370 and 372 via the solenoid driving circuit 204.

The solenoid 370 operatively cooperates with the sealing plate 384 to control the damping fluid between a central fluid passage 410 and a plurality of radially displaced passages 412 which are disposed on the sealing plate 384. When the solenoid 370 is open, damping fluid is able to flow between the central fluid passage 410 and the radially displaced passages 412. When the solenoid 370 is closed, the armature 378 moves downwardly against the force of the spring 382 to a position in sealing engagement with the sealing plate 384. When this occurs, the armature 378 prevents the flow of fluid between the passages 410 and 412. Similarly, the solenoid 372 cooperates with the sealing plate 396 to control the damping fluid between a central fluid passage 414 and a plurality of radially displaced flow passages 416 which are disposed on the sealing plate 396. When the solenoid 372 is open, damping fluid is able to flow between the central fluid passage 414 and the radially displaced flow passages 416. When the solenoid 372 is closed, the armature 390 moves downwardly against the force of the spring 394 to a position in sealing engagement with the sealing plate 396. When this occurs, the armature 390 prevents the flow of fluid between the passages 414 and 416.

The solenoid 370 communicates with the upper portion of the working chamber 42 through an axial passage 422 and a radial passage 124 in the piston post 334. The axial passage 422 extends from the central passage 410 of the sealing plate 384 and communicates with the radial passage 424 at its radially inward-most end. In addition, the solenoid 372 communicates with the lower portion of the working chamber 42 through the central bore 426 of a solenoid retaining plug 428. The solenoid retaining plug 428 has a threaded exterior surface which threadably engages the lower portion of the piston post 334.

To allow the fluid flowing through the passages 410-418 to counter-bias the valve disks 324 and 326, the valve body 302 further comprises the flow passages 430 and 432. The flow passage 430 radially extends from the pressure chamber 328 to the vertical flow passages 312, while the flow passage 432 extends from the pressure chamber 330 to the flow passages 314. Accordingly, damping fluid in the flow passage 312 is therefore able to enter the pressure chamber 328 through the flow passage 430, and damping fluid in the flow passages 314 is able to flow into the pressure chamber 330 through the flow passage 432.

In accordance with the principles of the present invention, it will be seen that two flow paths are created in the valve body 302. The first flow path allows damping fluid entering the flow passages 312 to flow to the upper portion of the working chamber 42. In this regard, the first flow path permits damping fluid in the vertical flow passages 312 to enter the pressure chamber 328 through the flow passage 430. The damping fluid in the pressure chamber 328 then flows to the radially displaced flow passages 412 of the sealing plate 384 through the flow passage 342 in the valve body 302 and the flow passage 340 in the piston post 334. If the solenoid 370 is open, damping fluid at the radially displaced flow passages 412 is able to flow through the second central flow passage 410, the axial flow passage 422 and the radial flow passage 424 to the upper portion of the working chamber 42.

The second flow path permits damping fluid flowing in the vertical flow passage 314 to enter the lower portion of the working chamber 42. In this regard, the second flow path permits damping fluid in the flow passages 314 to enter the pressure chamber 330 through the flow passage 432. The damping fluid in the pressure chamber 330 is therefore able to flow to the radially displaced flow passages 416 in the sealing plate 396 through the radially extended flow passage 346 in the valve body 302 and the radially extending flow passage 348 in the piston post 334. If the solenoid 372 is open, damping fluid delivered to the radially displaced passages 416 of the sealing plate 396 is able to pass through the central fluid passage 314 to the lower portion of the working chamber 42 through the central fluid passage 414 of the solenoid sealing plate 396.

To prevent leakage of damping fluid in the pressure chamber 328, an annular retaining seal 434 is provided. The annular retaining seal 434 is disposed within the pressure chamber 328 adjacent to the valve disk 324 so as to prevent damping fluid inside the pressure chamber 328 from entering the upper portion of the working chamber 42. An annular retaining ring 436 is also disposed within the pressure chamber 328 to ensure that the seal 434 is not displaced in such a manner as to allow hydraulic leakage between the pressure chamber 328 and the upper portion of the working chamber 42. In a similar fashion, an annular retaining seal 438 is disposed within the chamber 330 adjacent to the valve disk 326. The annular retaining seal 438 is used to prevent damping fluid inside the pressure chamber 330 from entering the lower portion of the working chamber 42. An annular retaining ring 440 is also disposed within the pressure chamber 330 to ensure that the seal 438 is not displaced in such a manner as to permit leakage of damping fluid between the pressure chamber 330 and the lower portion of the working chamber 42.

When a large amount of hydraulic fluid is to flow through the flow passage 314 corresponding to a soft rebound stroke, the solenoid 372 is closed thereby preventing fluid from flowing between the central fluid passage 414 and the radially displaced passage 416 of the sealing plate 396. Accordingly, damping fluid in the pressure chamber 328 is unable to flow into the lower portion of the working chamber 42. The pressure in the pressure chamber 330 therefore increases which increases the counter-biasing force applied to the valve disk 326. The valve disk 326 is then deflected from the valve body 302 to a greater extent than would otherwise occur thereby increasing the flow of damping fluid through the flow passage 314. If a firm rebound stroke is desired, the solenoid 372 is opened thereby causing the pressure in the pressure chamber 330 to be substantially equal to the pressure inside the lower portion of the working chamber 42. When this occurs, the counter-biasing force applied to the valve disk 326 is reduced. Less damping fluid is therefore able to flow through the flow passage 314 thereby producing a firm rebound stroke.

When a soft compression stroke is desired, the solenoid 370 is closed thereby preventing the flow of the damping fluid between the central fluid passage 410 and the radially displaced fluid passage 412 in the sealing plate 384. Because fluid is not able to flow between the passages 410 and 412, damping fluid in the pressure chamber 328 is not able to flow into the upper portion of the working chamber 42. Since the pressure of the damping fluid in the pressure chamber 328 becomes greater than the pressure in the upper portion of the working chamber 42, the counter-biasing force applied to the valve disk 324 increases causing a greater deflection in the valve disk 324. This increase in deflection of the valve disk 324 increases the flow of damping fluid through the flow passage 312 thereby producing a soft compression stroke. If a firm compression stroke is desired, the solenoid 370 is opened thereby connecting the pressure chamber 328 to the upper portion of the working chamber 42. Accordingly, the pressure inside the pressure chamber 328 is substantially equal to the pressure inside the upper portion of the working chamber 42, thereby limiting the counter-biasing force applied to the valve disk 326.

## Claims

1. A direct acting hydraulic shock absorber (20) for damping the movement of the body (39) of an automobile (22), said absorber (20) comprising:-
a pressure cylinder (40) defining a working chamber (42) having first and second portions operable to store damping fluid;
first valve means (326) for controlling the flow of damping fluid between said first and second portions of said working chamber during decrease in volume of said first portion of said working chamber (42);
a first pressure chamber (330) in fluid communication with said first portion of said working chamber (42) and said first valve means (326);
second valve means (324) for controlling the flow of damping fluid between said second and first portions of said working chamber (42) during decrease in volume of said second portion of the working chamber;
a second pressure chamber (328) in fluid communication with said second valve means (324);
whereby the damping fluid within said first pressure chamber (330) is able to bias said first valve means (326) and the damping fluid within said second pressure chamber (328) is able to bias said second valve means (324);
characterised in that first and second independent flow control means (370,372) are provided for controlling said first and second valve means (326,324).

2. A shock absorber according to claim 1, characterised in that the first flow control means (370) controls the flow of damping fluid between the first portion of the working chamber (42) and said second pressure chamber (328) and in that said second valve means (324) is in fluid connection with said first pressure chamber (330).

3. A shock absorber according to claim 1 or 2, characterised in that the second flow control means (372) controls the flow of damping fluid between said second portion of said working chamber (42) and said first pressure chamber (90).

4. A shock absorber according to claim 1, 2 or 3, characterised in that a first spring means (358) is provided for biasing said first valve means (326) in a direction opposing the biasing force provided by the pressure of the damping fluid in said first pressure chamber (330).

5. A shock absorber according to any preceding claim, characterised in that second spring means (350) are provided for biasing said second valve means (324) in a position operable to restrict the flow of damping fluid between said second and first portions of the working chamber (42) during decrease in volume of said second portion of said working chamber (42).

6. A shock absorber according to any preceding claim, characterised in that said second valve means (324) comprises a valve disk.

7. A shock absorber according to any preceding claim, characterised in that said first flow control means (370) comprises a solenoid.

8. A shock absorber according to claim 7, characterised in that said solenoid is disposed at least in part within said pressure cylinder (20).

9. A shock absorber according to claim 7 or 8, characterised in that said solenoid comprises an armature (378), said armature (378) being operable to regulate the flow of damping fluid between said first pressure chamber (330) and said second portion of said working chamber (42).

10. A shock absorber according to claim 9, characterised in that said armature (378) is operable to permit fluid communication between said first pressure chamber (330) and said second portion of said working chamber (42) when said solenoid is open.

11. A method for regulating the flow of damping fluid between first and second portions of the working chamber (42) of a direct acting hydraulic shock absorber (20), said method comprising the steps of:-
allowing damping fluid to flow between said second portion of said working chamber and a first pressure chamber (330) operable to receive damping fluid;
allowing damping fluid to flow between said first portion of said working chamber (42) and a second pressure chamber (328) operable to receive damping fluid;
regulating the flow of damping fluid from said first portion of said working chamber (42) to said second portion of said working chamber (42) during decrease in volume of said first portion of said working chamber (42);
regulating the flow of damping fluid from said second portion of said working chamber to said first portion of said working chamber (42) during decrease in volume of said second portion of said working chamber (42);
whereby the pressure of the damping fluid in said first pressure chamber (330) is operable to bias a first valve means (326) for controlling the flow of damping fluid between said first and second portions of said working chamber (42) and the pressure of the damping fluid
characterised in that the flow between the second portion of said working chamber (42) and said first pressure chamber (330) may be selectively attenuated so as to regulate the flow of damping fluid between said first and second portions of said working chamber (42) during decrease in volume of said first portion of said working chamber (42); and
in that the flow between the first portion of said working chamber (42) and said second pressure chamber (328) may be selectively attenuated so as to regulate the flow of damping fluid between said first and second portions of said working chamber (42) during decrease in volume of said second portion of said working chamber (42).

12. A method according to claim 11, characterised in that first valve means (326) is biased by a first spring (358) in a direction opposing the biasing force provided by the pressure of the damping fluid in the first pressure chamber (330).

13. A method according to claim 11 or 12, characterised in that the step of regulating the flow of damping fluid from said second portion of said working chamber (42) to said first portion of said working chamber (42) during decrease in volume of said second portion of the working chamber (42) comprises the step of allowing damping fluid in said second portion of said working chamber (42) to flow into said first portion through a second valve means (324) for regulating the flow of damping fluid.

14. A method according to claim 13, characterised in that the pressure of the damping fluid within said first pressure chamber (330) is operable to bias said second valve means (324) in opening direction.

15. A method according to claim 14, characterised in that said second valve means (324) is biased by a second spring (356) into a position operable to restrict the flow of damping fluid from said second portion of said working chamber (42) to said first portion of said working chamber during decrease in volume of said second portion of the working chamber (42).

16. A method according to any one of claims 11 to 15, characterised in that said step of selectively attenuating the flow between said first pressure chamber (330) and said second portion of said working chamber (42) comprises the step of selectively energizing an electrical controllable flow means (372,390) for regulating the flow of damping fluid between said first and second portions of said working chamber (42).

17. A method according to claim 16, characterised in that said electrical controllable flow means (372,390) comprises a solenoid (372).

18. A method according to claim 17, characterised in that said solenoid (372) is disposed at least in part within said pressure cylinder (40).

19. A method according to claim 18, characterised in that said solenoid (372) comprises an armature (390) being operable to regulate the flow of damping fluid between said first pressure chamber (330) and said second portion of said working chamber (42).

20. A method according to claim 19, characterised in that said armature (390) is operable to permit fluid communication between said first pressure chamber (330) and said second portion of the working chamber (42) when said solenoid (372) is open.
